# EUROPEAN PATENT APPLICATION

(11) **EP 2 196 364 A1**
(43) Date of publication of application: **16.06.2010**
(21) Application number: 08833055.0
(22) Date of filing: 26.09.2008
(51) Int. Cl.: B60R 25/10, B60J 1/17, E05B 45/00

(54) **WINDOW GLASS SECURITY SYSTEM FOR VEHICLE**

(30) Priority: 28.09.2007 JP 2007256093
(71) Applicant: Kabushiki Kaisha Toyota Jidoshokki, Kariya-shi, Aichi 448-8671 (JP)
(72) Inventor: SUZUKI, Tsuneo, Kariya-shi Aichi 448-8671 (JP)
(74) Representative: TBK-Patent
(86) International application number: PCT/JP2008/067485
(87) International publication number: WO 2009/041615

(57) **Abstract**

A vehicle window glass security system including a closure forgetting device, a glass breakage detection device, a detection unit, and a controller is disclosed. The closure forgetting detection device detects closure forgetting of a window glass. The glass breakage detection device detects breakage of the window glass. The detection unit is commonly shared by the glass breakage detection device and the closure forgetting detection device. The controller detects closure forgetting with the closure forgetting device before the glass breakage detection device starts a breakage detection mode to detect breakage of the window glass when the window glass is in not in a closure forgetting state.

## Description

### TECHNICAL FIELD

The present invention relates to a vehicle window glass security system, and more particularly, to a vehicle window glass security system that prevents a vehicle window glass from being forgotten to be closed and prevents theft when the window glass is broken.

### BACKGROUND ART

In the prior art, a power window closure forgetting prevention device for preventing a power window of a vehicle from being forgotten to be closed has been developed (for example, refer to patent publication 1). The device described in patent publication 1 includes a position detection signal input unit, into which a window glass position detection signal of an automobile power window is input, a key input unit, into which a switch output signal for detecting insertion of an ignition key is input, and a door input unit, into which a courtesy switch output signal of a door is input. Based on the signals input from the position detection signal input unit, the key input unit, and the door input unit, it is determined whether the window glass has been forgotten to be closed, and a warning is issued. Further, in this disclosure, when it is determined that the window glass has been forgotten to be closed, a timer starts a counting operation, the time goes up when a predetermined time elapses, and then the window glass is closed. This prevents the window from being forgotten to be closed without installing a new sensor for detecting the open state of the window glass.

Further, a vehicle theft prevention device that ensures detection of opening or breakage of a window glass when the vehicle is parked and issues a warning has also been developed (for example, refer to patent publication 2).

The device of patent publication 2 includes a stress sensor, which is arranged on a top edge of the window glass and compressed when the window is closed between the window glass and a window frame, a control unit, which determines whether or not to issue a warning based on the stress detection of the stress sensor, and a warning issuance device, which issues a warning. The stress sensor includes a resilient conductive tube and a center electrode member, which are arranged in the resilient conductive tube. When stress is applied, these two electrode members come into contact with each other and are electrically connected to enable the detection of stress. Accordingly, when the window glass opens from a closed state, the opening of the window glass releases the stress sensor from a compressed state. This returns the resilient conductive tube of the stress sensor to its original shape, and electrically disconnects the resilient conductive tube and the center electrode member. As a result, opening of the window glass is detected.
Further, when the window glass is broken in a state in which the window glass is closed, breakage of the window glass releases the stress sensor from the compressed state. This returns the stress sensor to its original shape and electrically disconnects the resilient conductive tube from the center electrode member. As a result, breakage of the window glass is detected.

When the stress sensor is in an uncompressed state in which it does not receive stress and the ignition switch shifts from an on or accessory state to an off state, the warning issuance device issues a warning using sound or the like to warn that the window glass has been forgotten to be closed.

The device of patent publication 1 prevents the window from being forgotten to be closed but cannot detect breakage (cracking) of the window glass. The device of patent publication 2 detects that the window glass has been forgotten to be closed and that the closed window glass has been opened or broken. However, in the device of patent publication 2, the stress sensor must be held in a compressed state between the window glass and the window frame in a referential state. This determines that the window glass has been forgotten to be closed and issues a warning even when the ignition switch shifts from an on or accessory state to an off state in a state where a gap that it too small for a hand to enter is formed for ventilation between the window glass and the window frame. Accordingly, when the window glass is slightly open for ventilation, there is a problem in that window glass breakage cannot be detected.
Patent Publication 1: Japanese Laid-Open Patent Publication No. 10-25961
Patent Publication 2: Japanese Laid-Open Patent Publication No. 2004-155251

### DISCLOSURE OF THE INVENTION

It is an object of the present invention to provide a vehicle window glass security system that prevents a window glass from being forgotten to be closed without a slightly open state of the window glass being erroneously determined as the window glass being forgotten to be closed, while also detecting glass breakage when the glass breaks.

To achieve the above object, one aspect of the present invention provides a vehicle window glass security system including a first detection device, a second detection device, a detection unit, and a control unit. The first detection device detects closure forgetting of a window glass. The second detection device detects breakage of the window glass. The detection unit is commonly shared by the first detection device and the second detection device. The control unit detects closure forgetting with the first detection device before the second detection device starts a breakage detection mode to detect breakage detection of the window glass when the window glass is not in a closure forgetting state.

### BRIEF DESCRIPTION OF THE DRAWINGS

Fig. 1 is a schematic view showing a right front door to which a security system according to one embodiment of the present invention is applied;
Fig. 2(a) is a longitudinal cross-sectional view taken along line 2-2 in Fig. 1, and Fig. 2(b) is a cross-sectional view of a clip shown in Fig. 2(a);
Fig. 3 is a perspective view showing a detection unit of Fig. 2(a); and
Fig. 4(a) is a schematic front view showing the window glass of Fig. 1 in a broken state, and Fig. 4(b) is a cross-sectional view taken along line 4b-4b in Fig. 4(a).
Fig. 5 is a flowchart showing a glass breakage detection process.

### BEST MODE FOR CARRYING OUT THE INVENTION

An embodiment of the present invention will now be discussed with reference to the drawings.

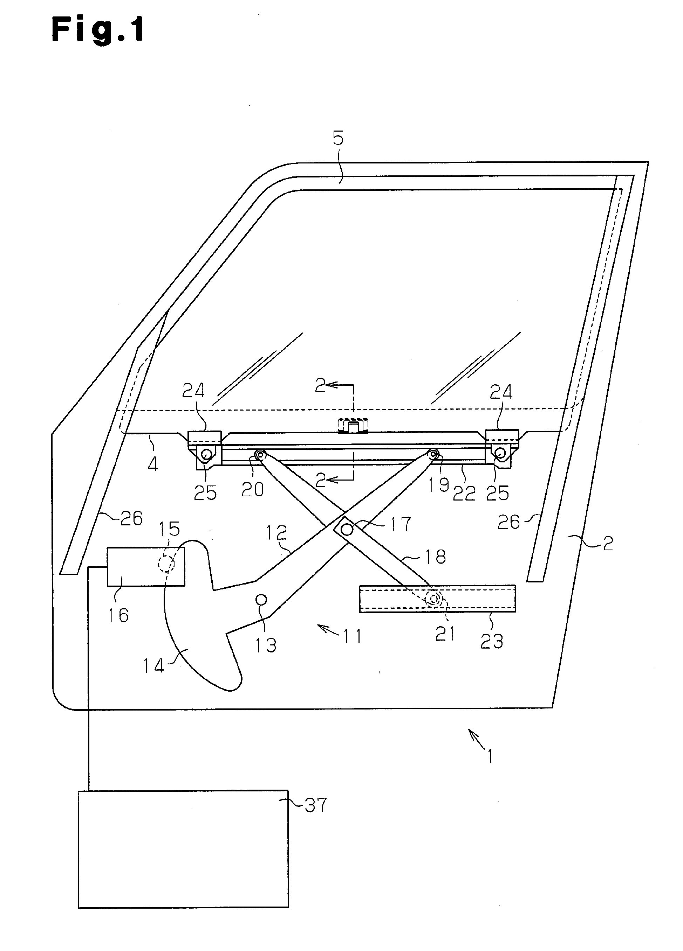

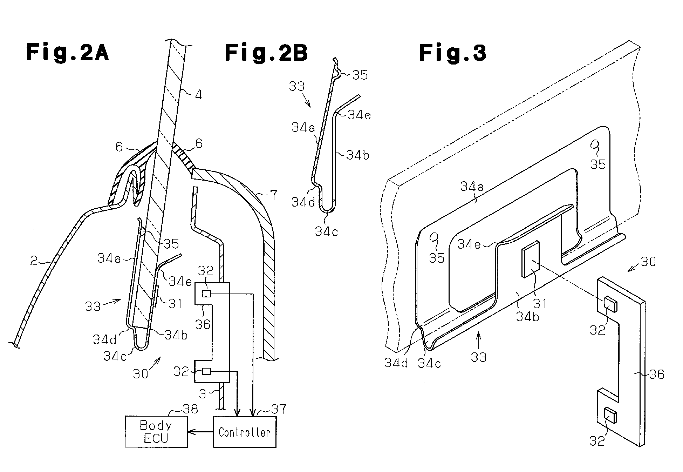

Fig. 1 is a schematic diagram showing a right door, from which an inner panel is removed, of an automobile from a vehicle interior side. A vehicle door 1 includes an outer panel 2 and an inner panel 3 (shown in Fig. 2(a)). A window glass 4, which is reinforced glass, is arranged between the outer panel 2 and the inner panel 3. The window glass 4 has a thickness of about 3.1 mm to 5.0 mm.

A window regulator 11 that vertically moves the window glass 4 is accommodated in the vehicle door 1. In the present embodiment, an X-arm window regulator is used as the window regulator 11.

The window regulator 11 includes a lift arm 12 pivotally supported about a pin 13, which is fixed to a base plate (not shown). A sector gear (driven gear) 14, which is pivoted about the pin 13, is formed integrally with one end of the lift arm 12. A pinion 15 (see Fig. 2), which mates with the sector gear 14, is driven by a motor 16.

The lift arm 12 includes an intermediate portion, which is located on the opposite side of the sector gear 14 with the pin 13 arranged in between. An intermediate portion of an equalizer arm 18 is pivotally coupled to the intermediate portion of the lift arm 12 by a pin 17. Guide pieces (rollers) 19 and 20 are rotatably supported by a top portion (distal portion) of the lift arm 12 and a top portion (distal portion) of the equalizer arm 18, respectively. A guide piece (roller) 21 is rotatably supported by a bottom portion of the equalizer arm 18.

The guide piece 19 of the lift arm 12 and the guide piece 20 of the equalizer arm 18 are movably fitted to a window glass bracket 22. The guide piece 21 of the equalizer arm 18 is movably guided by an equalizer arm bracket (orientation maintaining rail) 23.

Window glass holders 24 are fixed to the front and rear parts in the bottom edge of the window glass 4. The window glass holders 24 are fastened by bolts 25 to the window glass bracket 22 to fix the window glass 4.

Two parallel glass runs 26 are arranged between the outer panel 2 and the inner panel 3. The front and rear ends of the window glass 4 are guided by the glass runs 26 when moving up and down.

When the motor 16 drives the pinion 15, the sector gear 14 pivots the lift arm 12 about the pin 13. As a result, the window glass bracket 22 (window glass 4) is lifted or lowered while remaining generally horizontal due to the equalizer arm 18, the guide pieces 19, 20, and 21, and the equalizer arm bracket 23. In this manner, the window glass 4 is lifted and lowered so that an opening 5 of the vehicle may be freely opened and closed by the window glass 4.

As shown in Fig. 2(a), a detection unit 30, which is commonly shared by a closure forgetting prevention detection device (first detection device) and a glass breakage detection device (second detection device), is arranged in the vehicle door 1. The detection unit 30 includes a magnet (permanent magnet) 31, which serves as a detected portion attached to an end portion of the window glass 4, and a magnetic sensor 32, which is arranged on a vehicle body side. The window glass 4 is arranged between the outer panel 2 and the inner panel 3 in a state sealed by a weather strip 6. A door rim 7 is attached to part of the weather strip 6. The magnet 31 is coupled by a clip 33 to a portion of the window glass 4 that projects downward from the weather strip 6 when the window glass 4 is fully closed.

As shown in Figs. 2(b) and 3, the clip 33, which is made of metal, includes a first pressing piece 34a, a second pressing piece 34b, and a connecting portion 34c. The first pressing piece 34a has the shape of an upside down U when viewed from the front. The second pressing piece 34b is tetragonal, has a narrower width and lower height than an open portion of the first pressing piece 34a when viewed from the front. The connecting portion 34c has a generally U-shaped cross-section. The connecting portion 34c integrally connects a basal portion of the first pressing piece 34a and a basal portion of the second pressing piece 34b. Thus, the first pressing piece 34a, the second pressing piece 34b, and the connecting portion 34c are formed integrally. The second pressing pieces 34b has an upper part that is bent to form a bent portion 34e, which diagonally extends away from the first pressing piece 34a. Referring to Fig. 2(b), when the clip 33 is in a free state, the first pressing piece 34a is entirely inclined toward the second pressing piece 34b.

Projections 35 are formed on a distal portion of the first pressing piece 34a at two lateral ends of a surface facing toward the window glass 4. A stepped portion 34d is arranged between a basal portion of the first pressing piece 34a and the connecting portion 34c. In a state in which the clip 33 is attached to the window glass 4, the stepped portion 34d prevents planar contact of the window glass 4 with both the first pressing piece 34a and the second pressing piece 34b. Referring to Fig. 2(a), in a state in which the clip 33 is attached to the window glass 4, the first pressing piece 34a and the second pressing piece 34b substantially extend in parallel. Further, the projections 35 and the basal part in the bent portion 34e of the second pressing piece 34b are pressed against the window glass 4 with a force directed toward each other.

A magnet 31 is adhered to the second pressing piece 34b on a surface opposite to the window glass 4. A sensor bracket 36 is fixed to the inner panel 3 at a position corresponding to the magnet 31 when the window glass 4 is fully closed. Two magnetic sensors 32, which are spaced apart in the vertical direction (moving direction of the window glass 4) by a predetermined interval, are fixed to the sensor bracket 36. For example, Hall ICs may be used as the magnetic sensors 32.

The interval at which the magnetic sensors 32 are arranged is set so that the upper magnetic sensor 32 is detectable of the magnetic flux of the magnet 31 having a predetermined intensity or greater when the window glass 4 is fully closed and the lower magnetic sensor 32 is detectable of the magnetic flux of the magnet 31 having a predetermined intensity or greater when the window glass 4 is open so that a person's hand is insertable into a gap between the window glass 4 and the window frame. Although it depends on the type of the magnetic sensor 32, when using just one magnetic sensor 32, as long as the gap between the window glass 4 and the window frame is 0 (fully open) to 3 cm, the single magnetic sensor 32 is detectable of the magnetic flux of the magnet 31 having a predetermined intensity or greater regardless of the open state of the window glass 4. However, when the gap between the window glass 4 and the window frame is in the range of 0 to 6 cm, the single magnetic sensor 32 cannot detect the magnetic flux of the magnet 31 having a predetermined intensity throughout the entire range. Accordingly, by arranging the two magnetic sensors 32 along the moving direction of the window glass 4, at least one of the magnetic sensors 32 would be able to detect the magnetic flux of the magnet 31 having a predetermined intensity or greater throughout the entire range of 0 to 6 cm for the gap of the window glass 4.

In a normal vehicle door 1, when the gap between the window glass 4 and the window frame is 4 to 6 cm, a person's hand can be inserted into the passenger compartment through the gap. However, when the vehicle door 1 includes a side visor, which is one type of a light shield, a person's hand cannot be inserted into the passenger compartment even when the gap is 4 to 6 cm due to the presence of the side visor. Further, when the gap is 2 to 3 cm, satisfactory ventilation will be difficult. However, when the gap is 4 to 6 cm, satisfactory ventilation is performed.

The magnetic sensors 32 are connected to a controller 37, which serves as a control unit.
The controller 37 is formed by a microcomputer and stores in a memory a map showing the relationship of the detected flux intensity of the two magnetic sensors 32 and the distance from the two magnetic sensors 32 to the magnet 31. The controller 37 is connected to a body ECU 38. When determining glass breakage from the detection signals of the magnetic sensors 32, the controller 37 sends a glass breakage detection signal to the body ECU 38. Further, the controller 37 receives a signal used to presume that the vehicle occupant has left the vehicle. Such a signal may be, for example, the signal of a courtesy switch, a switch for detecting that a gearshift lever has been shifted to a parking position, or an ignition switch.

The operation of the vehicle window glass security system will now be discussed.

First, the operation of the detection unit 30 will be discussed.

When the window glass 4 is located at a fully closed position or a position in which the gap formed with the window frame is smaller than a size enabling insertion of a person's hand, at least one of the two magnetic sensors 32 outputs a detection signal indicating magnetic flux having a predetermined intensity or greater. Further, when the window glass 4 is located at a position in which the gap formed with the window frame is larger than the size enabling insertion of a person's hand, each of the two magnetic sensors 32 does not output a detection signal indicating magnetic flux having a predetermined intensity or greater. Accordingly, based on the detection signals of the magnetic sensors 32, the controller 37 determines whether the window glass 4 is in a state in which it has not been forgotten to be closed or whether the window glass 4 is in a state in which it is open wider than a state in which it has not been forgotten to be closed.

The detection of the glass breakage will now be discussed. In a normal state, as shown in Fig. 2(a), the clip 33, which is attached to the end portion of the window glass 4, clamps the end portion of the window glass 4. In detail, the projections 35 of the first pressing piece 34a of the clip 33 locally press one side of the window glass 4, and the second pressing piece 34b presses the other side of the window glass 4 below the projections 35.

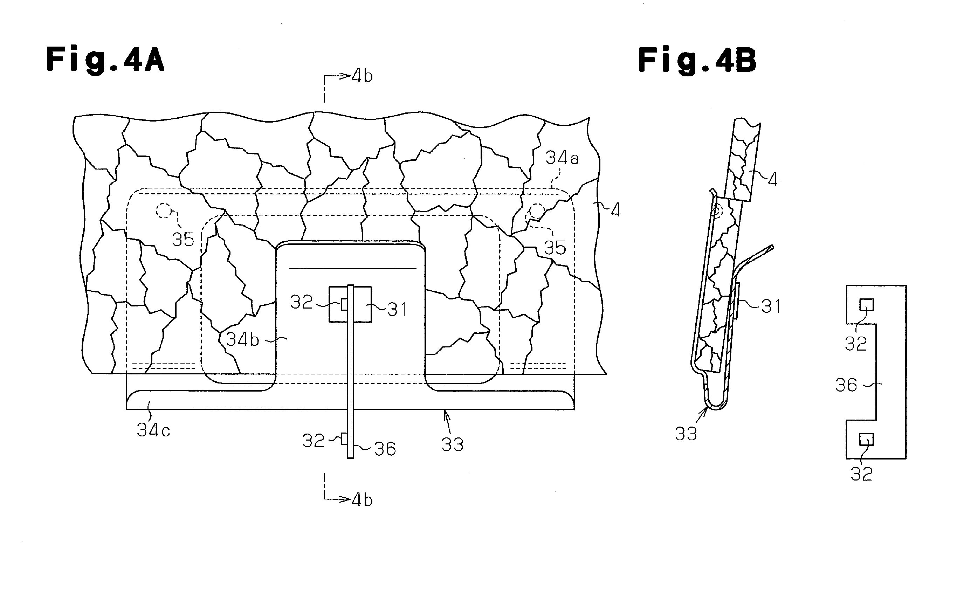

In this state, when part of the window glass 4 breaks, cracks form in the entire window glass 4, which is reinforced glass. As shown in Fig. 4(a), this forms cracks throughout the area in which the clip 33 is attached and drastically decreases the strength.

The decrease in strength readily breaks the end portion (bottom portion) of the window glass 4, which receives pressing forces directed toward each other from the first pressing piece 34a and the second pressing piece 34b. This separates at least the portion of the window glass 4 clamped by the clip 33 from the remaining portion. As the magnet 31 falls together with the clip 33, the magnetic flux of the magnets 31 can no longer be detected by the magnetic sensors 32. As a result, the controller 37 determines from the detection signals of the magnetic sensors 32 that glass breakage has occurred.

When the window glass 4 breaks, the magnet 31 may not fall together with the clip 33, and the magnet 31 may be attracted onto the inner panel 3 or the sensor bracket 36 depending on the scattered state of glass. However, even in such a case, the distance between the magnetic sensors 32 and the magnet 31 differs between a state before breakage and a state after breakage. Thus, the magnetic flux intensity detected by the magnetic sensors 32 differs greatly from when a glass breakage detection mode is started, and the controller 37 may detect breakage of the window glass 4 based on the detection signals of the magnetic sensors 32.

The operation of the vehicle window glass security system will now be discussed.

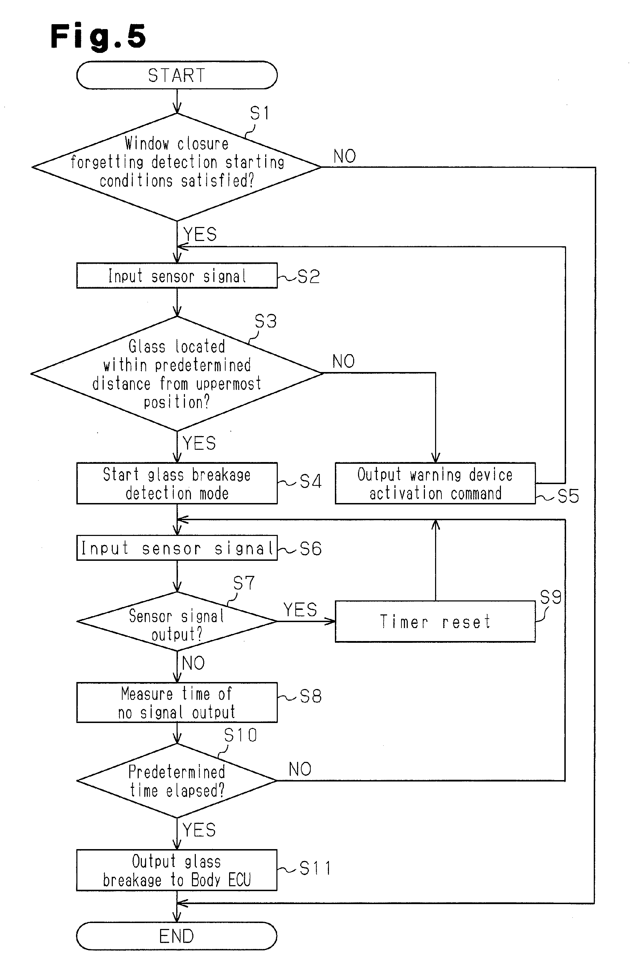

The controller 37 is operated in accordance with the flowchart of Fig. 5 in predetermined time intervals.

First, in step S1, the controller 37 determines whether or not conditions for starting window closure forgetting detection have been satisfied. The window closure forgetting closure conditions refers to conditions in which it may be presumed that a vehicle occupant has left the vehicle. In this embodiment, when the controller 37 receives a signal indicating that the gearshift lever is arranged at the parking position and a signal indicating that the vehicle door is locked, the controller 37 determines that the window closure forgetting detection conditions have been satisfied, the controller 37 proceeds to step S2 to start a window closure forgetting detection process. When the window closure forgetting detection conditions are not satisfied, the controller 37 ends the process.

In step S2, the controller 37 receives sensor signals, that is, the signals of the magnetic sensors 32. Then, the controller 37 proceeds to step S3 and determines whether or not the window glass 4 is located within a predetermined distance from the uppermost position (fully closed position), that is, whether or not the window glass has been forgotten to be closed. More specifically, the controller 37 determines whether or not at least one of the magnetic sensors 32 has output a detection signal indicating magnetic flux having the predetermined intensity or greater. When determining that such a signal is output, the controller 37 determines that the window has not been forgotten to be closed and proceeds to step S4 to start the glass breakage detection mode. When a detection signal indicating magnetic flux having the predetermined intensity or greater is not output from any of the magnetic sensors 32 in step S3, the controller 37 determines that the window has been forgotten to be closed. The controller 37 then proceeds to step S5 and outputs a command for activating a warning device (not shown). Then, the controller 37 returns to step S2 and repeats the processes from step S2. After the window glass 4 is moved so that it is not in a state in which it has been forgotten to be closed, the controller 37 proceeds to step S4. That is, when the window has been forgotten to be closed, the warning device issues a warning noise or turns on a warning lamp so that the vehicle occupant notices that he or she has forgotten to close the window and moves the window glass to a position indicating that it has not been forgotten to be closed. Then, the controller 37 proceeds to step S4.

When the glass breakage detection mode starts, in step S6, the controller 37 receives the sensor signals, that is, the detection signals of the magnetic sensors 32 and then proceeds to step S7 to determine the presence of a magnet detection signal from the magnetic sensors 32. When a magnet detection signal is present in step S7, this would be a normal state, that is, no glass breakage. Thus, the controller 37 proceeds to step S9 and resets a timer. Then, the controller 37 repeats the processes of steps S6 and S7. When a magnet detection signal is not present in step S7, there is a possibility of glass breakage. Thus, the controller 37 proceeds to step S8 and measures the time in which a detection signal is not present. More specifically, the controller 37 starts or continues counting with the timer in step S8.

In following step S10, the controller 37 determines whether or not a predetermined time has elapsed. When the predetermined time has elapsed, the controller 37 determines that glass breakage has occurred and proceeds to step S11. In step S11, the controller 37 sends a glass breakage signal to the body ECU 38 and ends processing.

When receiving the glass breakage signal, the body ECU 38 performs a glass breakage warning process. The glass breakage warning process includes activation of a warning device to notify the breakage of the window glass 4 outside the vehicle with a warning sound or a warning lamp or to send a notification to a security center.

This embodiment has the advantages described below.
(1) The vehicle window glass security system includes a window glass closure forgetting prevention device and a glass breakage detection device, and the window glass closure forgetting prevention device and glass breakage detection device commonly share the detection unit 30. Before starting the glass breakage detection mode with the glass breakage detection device, the window glass security system detects with the closure forgetting device whether the window has been forgotten to be closed and performs glass breakage detection when the window glass 4 has not been forgotten to be closed. Accordingly, for example, when the window glass 4 is open for ventilation such that it would not cause a security problem, the window is not erroneously determined as having been forgotten to be closed, and unnecessary glass breakage detection operations are not performed. Further, the detection unit 30 is commonly used for closure forgetting detection and glass breakage detection. This decreases the number of components and reduces costs.
(2) When the window glass is in a state in which the window glass has not been forgotten to be closed, the gap between the window glass 4 and the window frame is smaller than a size in which a person's hand is insertable. Accordingly, in addition to a fully close state of the window glass 4, closure forgetting is not determined even when a predetermined gap is formed between the window glass 4 and the window frame. This allows the vehicle occupant to leave the vehicle with a slight gap formed between the window glass 4 and the window frame for ventilation.
(3) The detection unit 30 includes the magnet 31, which is attached to an end portion of the window glass 4, and the magnetic sensors 32, which are arranged on the vehicle body side. Further, the detection unit 30 determines the open amount and occurrence of breakage of the window glass 4 from the state of the magnetic flux of the magnet 31 detected by the magnetic sensors 32. Accordingly, the closure forgetting detection device and the glass breakage detection device commonly shares the detection unit 30 with a simple structure.
(4) The magnet 31, which serves as the detected portion, is coupled by the clip 33 to the end portion of the window glass 4. The clip 33 clamps the window glass 4 applying pressing forces at different positions to opposite sides of the window glass 4. Accordingly, when part of the reinforced glass breaks and thereby entirely cracks the glass, the portion of the window glass 4 clamped by the clip 33 with the pressing forces of the first and second pressing pieces 34a and 34b breaks, and the clip 33 falls down together with the magnet 31. This ensures breakage detection of the window glass 4.
(5) The detection unit 30 includes the two magnetic sensors 32, which are spaced apart by a predetermined interval in the vertical direction (moving direction of the window glass 4). Accordingly, the same detection unit 30 may be used to detect whether or not the window glass 4 has been forgotten to be closed regardless of whether the vehicle door 1 includes a side visor.
(6) When determining glass breakage based on the detection signals of the magnetic sensors 32, the controller 37 does not immediately determine glass breakage when there are no magnet detection signals from the two magnetic sensors 32. The controller 37 determines glass breakage when there are no magnet detection signals for a predetermined time. This prevents erroneous glass breakage determination that may be caused by noise.

The embodiment described above is not limited only to that description. For example, embodiments in the forms described below are possible.

When detecting whether closure has been forgotten before entering the glass breakage detection mode, instead of activating the warning device to prompt the driver (vehicle occupant) to close the window glass 4, the controller 37 may send a drive signal to the motor 16 of the window regulator 11 and automatically move the window glass 4 so that it is not in a state in which it has been forgotten to be closed. That is, step S5 in the flowchart of Fig. 5 may be processed so that the window glass 4 is automatically moved so that it is not in a state in which it has been forgotten to be closed. More specifically, a drive command in the direction for closing the window glass 4 is sent to the motor 16 of the window regulator 11. In this case, even if the vehicle occupant leaves the vehicle in a state in which closure of the window glass 4 has been forgotten, the window glass 4 is automatically moved so that it is not in a state in which it has been forgotten to be closed. Thus, for example, the vehicle occupant does not have to return to the vehicle when a warning is issued to close the window glass.

When detecting that closure has been forgotten, the controller 37 first activates the warning device. Then, when detecting that closure has been forgotten even after a predetermined time elapses, a signal for driving the window glass 4 in the closing direction may be output to the motor 16.

An X-arm window regulator is used as a device for automatically lifting and lowering the window glass 4. However, a cable window regulator or any other type of lifting and lowering device may be used instead.

The drive unit for lifting and lowering the window glass is not limited to the automatic drive unit, which includes the motor 16. The window glass 4 may be manually driven by a vehicle occupant.

The detection unit 30 may include just one magnetic sensor 32. For example, by using a magnetic sensor 32 having a high sensitivity or by using a magnet 31 having a strong magnetic force, the same functions as two magnetic sensors 32 may be obtained. Further, by using a magnet 31 having an elongated shape, the same functions as two magnetic sensors 32 may be obtained by one magnetic sensor 32 even when the magnetic force is the same. It should be noted that three or more magnetic sensors 32 may be used.

The detection unit 30 is not limited to a structure in which the magnet 31 is used as the detected portion so that the magnetic sensor 32 detects the detected portion. For example, an infrared reflective film may be applied to the clip 33 or the end portion of the window glass 4, and an infrared sensor may be arranged on the vehicle body. The infrared reflective film has a length in the vertical direction (moving direction of the window glass 4) that is set so that infrared emitted from the infrared sensor when the window glass 4 is in a state in which it has been forgotten to be closed is reflectable to the infrared sensor. In this case, the infrared sensor emits infrared and receives reflection light from the reflective film to detect whether or not the window glass 4 is located at a non-closure forgetting position or determine whether or not the window glass 4 is broken.

The detection unit 30 does not necessarily have to include the clip 33 that breaks the window glass 4 near the detected portion. For example, without using the clip 33, the magnet 31 may be fixed to the window glass 4 with an adhesive agent or an adhesive tape. Depending on the type of the window glass 4, when a partial breakage occurs, the window glass 4 may entirely crack and be broken into pieces. When using such a window glass 4, there is no need for the clip 33, which ensures breakage of the window glass 4 near the detected portion. However, the use of the clip 33 would ensure glass breakage regardless of the type of reinforced glass.

When the controller 37 detects glass breakage, instead of a structure in which the glass breakage detection signal is sent to the body ECU 38 so that the body ECU 38 performs a glass breakage warning process, the controller 37 may perform the glass breakage warning process.

The warning device, which is activated when the controller 37 detects closure forgetting, and the warning device, which is activated by the body ECU 38, may be different warning devices or the same warning device.

The conditions for the controller 37 to start the closure forgetting detection is only required to be a state in which it may be presumed that the vehicle occupant has left the vehicle. For example, a sensor for detecting whether or not the driver is seated on the driver's seat may be used to start detecting whether the window has been forgotten to be closed when a detection signal indicating that the driver is not present is output. Alternatively, a sensor for detecting whether a not a person is in the passenger compartment may be used to start detecting whether the window has been forgotten to be closed when a detection signal indicating a person is not present in the passenger compartment is output.

The clip 33 is arranged at the bottom portion of the window glass 4 but may be arranged instead at a lower sideward part of the window glass 4. It is only required that the clip 33 be arranged on the end portion of the window glass 4 at an unnoticeable area in the vehicle door 1.

In the above-described embodiment, the detection unit 30 is applied to the right door of a vehicle. However, it is obvious that the detection unit 30 may be applied to any other side door. In addition to side doors, the detection unit 30 may be applied to a rear door or an openable glass roof arranged in the roof of the vehicle.

## Claims

1. A vehicle window glass security system comprising:
a first detection device that detects closure forgetting of a window glass;
a second detection device that detects breakage of the window glass;
a detection unit commonly shared by the first detection device and the second detection device; and
a control unit that detects closure forgetting with the first detection device before the second detection device starts a breakage detection mode to detect breakage detection of the window glass when the window glass is not in a closure forgetting state.

2. The window glass security system according to claim 1, wherein the first detection device determines that the window glass is not in the closure forgetting state when a gap between the window glass and a window frame is less than a size in which a person's hand is insertable.

3. The window glass security system according to claim 1 or claim 2, wherein the control unit activates an automatic closing device when the first detection device detects closure forgetting to automatically move the window glass to a state that is not a closure forgetting state.

4. The window glass security system according to any one of claims 1 to 3, wherein the detection unit includes a magnet attached to an end portion of the window glass and a magnetic sensor arranged in a vehicle body, and the detection unit determines an open amount and occurrence of breakage of the window glass based on a state of magnetic flux of the magnet detected by the magnetic sensor.

5. The window glass security system according to claim 4, wherein the detection unit further includes a clip that clamps an end portion of the window glass with a pressing force that enables breakage of the window glass when the window glass cracks, and the magnet is attached to the clip or a portion of the window glass broken by the clip.

6. The window glass security system according to claim 5, wherein the magnetic sensor includes a plurality of magnetic sensors arranged at predetermined intervals in a moving direction of the window glass.

7. The window glass security system according to any one of claims 1 to 3, wherein the detection unit includes a clip, which clamps an end portion of the window glass with a pressing force that enables breakage of the window glass when the window glass cracks, and a detected portion, which is attached to the clip or a portion of the window glass broken by the clip.
